# EUROPEAN PATENT SPECIFICATION

(11) **EP 2 787 217 B1**
(45) Date of publication and mention of the grant of the patent: **06.12.2017**
(21) Application number: 14162042.7
(22) Date of filing: 27.03.2014
(51) Int. Cl.: F04D 1/12, F04D 15/00, B01D 19/00, B64G 1/60

(54) **Liquid depth-operated valve assembly for use in a zero gravity environment and method**
Flüssigkeitsstandbetriebene Ventilanordnung zur Verwendung unter Schwerelosigkeit und Verfahren
Ensemble de soupape opéré en fonction de la profondeur de liquide destiné à utilisation en état d'apesanteur et procédé

(30) Priority: 01.04.2013 US 201313854591
(43) Date of publication of application: 08.10.2014
(73) Proprietor: Hamilton Sundstrand Space Systems International, Inc., Windsor Locks, CT 06096 (US)
(72) Inventor: Todd IV, Charles H., Webster, TX Texas 77058 (US); VanBuskirk, Jonathan G., Alliance, OH Ohio 44601 (US)
(74) Representative: Leckey, David Herbert

(56) References cited:
- DE-C- 844 537
- US-A- 3 213 592
- US-A- 3 224 173
- US-A- 3 936 214
- US-A- 5 145 314

## Description

### BACKGROUND OF THE INVENTION

The present invention relates to separating a liquid from a gas in a zero gravity environment, and more particularly to a liquid depth-operated valve assembly in such an environment.

Transporting liquids in a low or zero gravity environment poses numerous challenges. A space toilet is an example of an application requiring transporting and storing a liquid, such as urine. Typically, the transport mechanism for moving urine from a person to the toilet is air flow. The toilet then separates the liquid urine from the air flow and pumps the liquid into a storage tank for later processing or dumping. A common way to separate the liquid from air is by employing a spinning centrifugal separator. Unfortunately, air remaining in the liquid, referred to as "air inclusion," is common and problematic, as it decreases the capacity of the storage tank and makes pumping the liquid difficult.

A centrifugal separator for removing liquid from a liquid-gas stream, having the features of the preamble of claim 1 is disclosed in US-3224173. A method of operating a Pitot pump is disclosed in US-5145314. An apparatus for the continuous treatment of a liquid to remove entrained or occluded gas is disclosed in US-3213592.

### BRIEF DESCRIPTION OF THE INVENTION

The present invention provides a liquid depth-operated valve assembly for use in a zero gravity environment as recited in claim 1, and a method of pumping liquid in a zero gravity environment as recited in claim 4.

### BRIEF DESCRIPTION OF THE DRAWINGS

The subject matter which is regarded as the invention is particularly pointed out and distinctly claimed in the claims at the conclusion of the specification. The foregoing and other features and advantages of the invention are apparent from the following detailed description taken in conjunction with the accompanying drawings in which:
FIG. 1 is a perspective view of a liquid depth operated valve assembly comprising a centrifugal separator and a Pitot pump with a depth-sensing port;
FIG. 2 is a perspective view of a portion of a Pitot pump falling outside the scope of the invention;
FIG. 3 is a cross-sectional view of the portion of the Pitot pump of FIG. 2;
FIG. 4 is an enlarged, cross-sectional view of the portion of the Pitot pump according to an embodiment of the invention; and
FIG. 5 is a flow diagram illustrating a method of pumping liquid in a zero gravity environment with the liquid depth operated valve assembly.

### DETAILED DESCRIPTION OF THE INVENTION

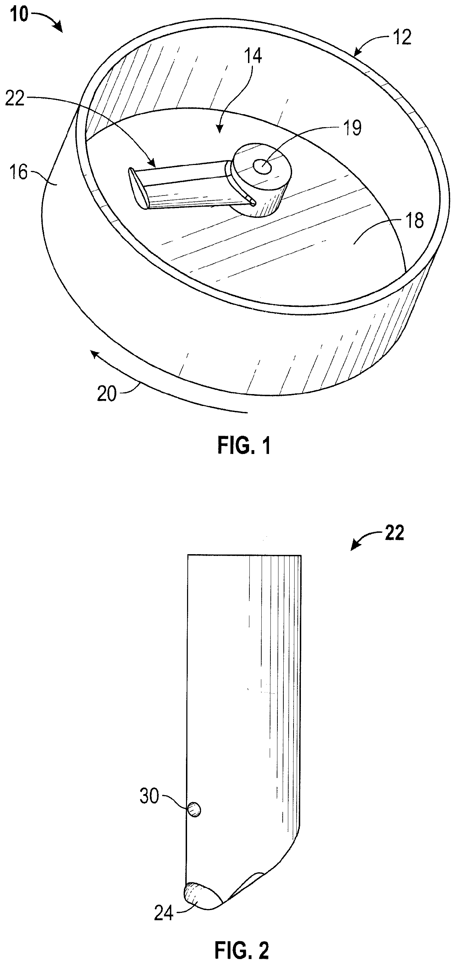

Referring to FIG. 1, illustrated generally is a liquid depth operated valve assembly 10. The liquid depth operated valve assembly 10 may be used in a variety of applications that require separating different density fluids, such as air and liquid, in a low or zero gravity environment. In one embodiment, the liquid depth operated valve assembly 10 as according to claim 1 is employed in conjunction with a toilet on a space vehicle or space station, for example. In such an embodiment, liquid urine from an individual is transported by an air flow that directs the liquid urine into the liquid depth operated valve assembly 10, which then pumps the liquid urine into a storage tank for processing or dumping. Several alternative liquids and applications are contemplated and it is to be appreciated that the embodiment described above is not intended to be limiting of other low or zero gravity applications for the liquid depth operated valve assembly 10.

The liquid depth-operated valve assembly 10 includes a centrifugal separator 12 that comprises a drum having an interior region 14 defined by at least one sidewall 16 and a pair of opposing walls 18, only one of which is illustrated for clarity. The centrifugal separator 12 may be formed of numerous geometries, such as the substantially cylindrical exemplary illustrated embodiment. The centrifugal separator 12 is configured to rotate, as shown with arrow 20. Rotation of the centrifugal separator 12 may be facilitated by a shaft operatively coupled to the centrifugal separator 12 and the rotation may be at various speeds that result in a desired centrifugal force on objects or matter disposed within the interior region 14. Although not illustrated, an inlet line is included and extends through the at least one sidewall 16 and/or one of the pair of opposing walls 18. The inlet line is configured to introduce a mixture of liquid and air into the interior region 14.

A Pitot pump 22 is disposed at least partially within the interior region 14 of the centrifugal separator 12. The Pitot pump 22 is operatively coupled to at least one of the opposing walls 18 at a substantially central location 19 within the interior region 14 and is fixed in a stationary position, relative to the rotating centrifugal separator 12. From the central location, the Pitot pump 22 extends radially outwardly toward the at least one sidewall 16. In the illustrated embodiment, the Pitot pump 22 is not fully extended to the at least one sidewall 16, but it is to be understood that the Pitot pump 22 may extend to a radial location that is proximate the at least one sidewall 16.

In operation, the centrifugal separator 12 imparts a centrifugal force on the mixture of liquid and air within the interior region 14 during rotation, thereby biasing the higher-density fluid to radially outward locations, thereby forming a liquid-air interface that substantially divides the liquid from the air. However, proximate the liquid-air interface, a mixture of liquid and air is present.

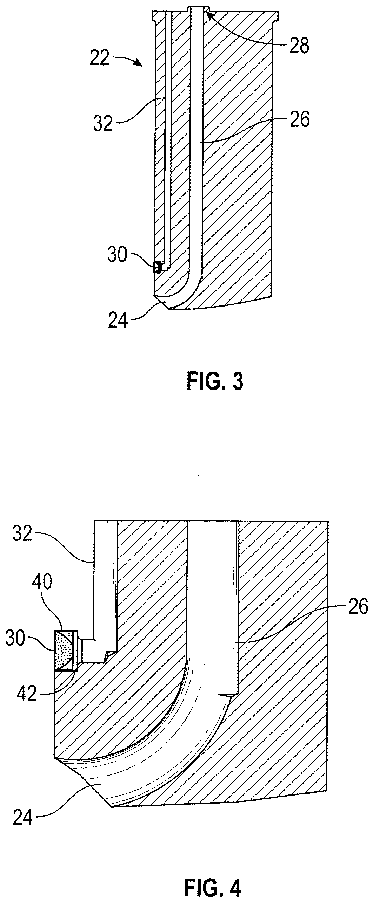

Referring now to FIGS. 2 and 3, an enlarged view of a radially outer portion of the Pitot pump 22 is illustrated. This portion of the Pitot pump 22 includes a Pitot opening 24 disposed at a first radial location of the Pitot pump 22. The Pitot opening 24 leads to a Pitot pump fluid path 26 that functions as a fluid "pick-up" path for routing fluid from the interior region 14 to a location for pumping to a storage tank (not illustrated). The flow rate of fluid within the Pitot pump fluid path 26 is controlled by a valve 28. In an effort to decrease the amount of air that is accepted into the downstream storage tank, in one embodiment the Pitot opening 24 is substantially submerged in only liquid prior to opening the valve 28 to allow the flow of fluid through the Pitot pump fluid path 26.

A depth-sensing port 30 is disposed at a second radial location along the Pitot pump 22 that is radially inward of the first radial location. The terms "first radial location" and "second radial location" refer to locations along the Pitot pump 22, relative to the substantially central location 19 of the interior region 14. As described above, during rotation of the centrifugal separator 12, liquid is forced to radially outward locations of the interior region 14. As the liquid builds up proximate the at least one sidewall 18, the Pitot opening 24 becomes submerged prior to the liquid-air interface reaching the depth-sensing port 30. Once the liquid level reaches the depth-sensing port 30 within the interior region 14, a total pressure comprising stagnation pressure and hydrostatic pressure is detected and communicated to the valve. Once this higher pressure is detected, the likelihood of liquid submersion of the Pitot opening 24 is increased. The depth-sensing port 30 is in operative communication with the valve 28 and is configured to communicate the pressure at the depth-sensing port 30 to the valve 28. Detecting and communicating the total pressure to the valve 28 may be performed in a number of structural manners.

In one arrangement falling outside the scope of the claims (e.g., FIGS. 2 and 3), the depth-sensing port 30 is fluidly coupled to the valve 28 via a depth-sensing port fluid path 32 extending from the depth-sensing port 30 to a location proximate the valve 28. As the liquid submerges the depth sensing port 30, the liquid is free to move through the depth-sensing port fluid path 32 toward the valve 28. Upon reaching the valve 28, a pressure of the depth-sensing port 30 in a submerged condition is sufficient to open the valve 28. The valve 28 is configured to open at a critical pressure that will depend on the particular application, but once the critical pressure is exceeded, the valve 28 opens and the liquid is free to flow through the Pitot pump fluid path 26.

In another arrangement falling outside the scope of the claims, a similar configuration as that described above may be employed, but the pressure proximate the depth sensing port 30 is communicated via an electrical signal to the valve 28 or a valve controller. In this arrangement, a pressure-sensing device, such as a pressure transducer is disposed proximate the depth-sensing port 30 and is configured to send the signal to the valve 28 or valve controller. The pressure signal may be amplified by a signal amplifier, such as a fluid transistor.

In an embodiment of the invention, and as is illustrated in FIG. 4, a similar configuration as that described above may be employed, however, to prevent salt deposits and corrosion from degrading the system, a bore portion 40 is included at the depth-sensing port 30. Disposed within the bore portion 40 is a diaphragm 42 comprising an elastic membrane that isolates the depth-sensing port fluid path 32 from the liquid, thereby reducing or eliminating corrosive deposits from entering the depth-sensing port fluid path 32. Disposed behind the diaphragm 42 within the depth-sensing port fluid path 32 is a non-corrosive, incompressible fluid behind the diaphragm that transfers the pressure exerted by the liquid against the bore portion 40 of the depth sensing port 30 to the valve 28.

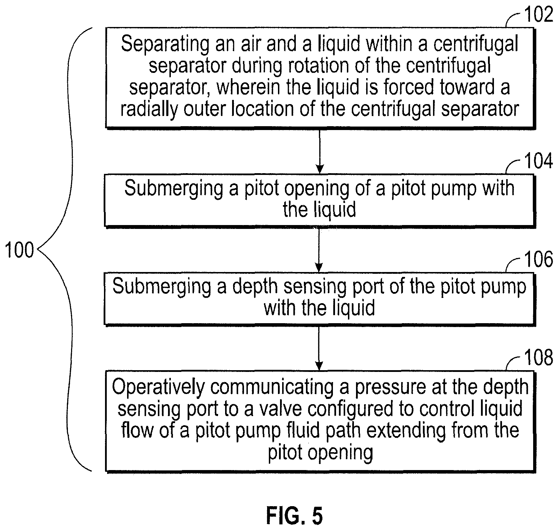

A method of pumping liquid in a zero gravity environment 100 is also provided, as illustrated in FIG. 5 and with reference to FIGS. 1-4. The liquid depth-operated valve 10 has been previously described and specific structural components need not be described in further detail. The method of pumping liquid in a zero gravity environment 100 includes separating 102 an air and a liquid within the centrifugal separator 12 during rotation of the centrifugal separator 12, wherein the liquid is forced toward a radially outer location of the centrifugal separator 12. The Pitot opening 24 of a Pitot pump is submerged 104 within the liquid. The depth-sensing port 30 is submerged 106 with the liquid. The pressure at the depth-sensing port 30 is operatively communicated 108 to the valve 28 that is configured to control liquid flow of the Pitot pumped fluid path 26. According to the invention, the method further includes disposing a diaphragm 42 proximate the depth-sensing port 30, and disposing a non-corrosive, incompressible fluid within a depth-sensing port fluid path 32 (in accordance to the embodiment described above and as shown in FIG. 4). While the invention has been described in detail in connection with only a limited number of embodiments, it should be readily understood that the invention is not limited to such disclosed embodiments. Rather, the embodiments can be modified to incorporate any number of variations, alterations, substitutions or equivalent arrangements not heretofore described, but which are commensurate with the scope of the invention as defined by the appended claims. Accordingly, the invention is not to be seen as limited by the foregoing description, but is only limited by the scope of the appended claims.

## Claims

1. A liquid depth-operated valve assembly (10) for use in a zero gravity environment comprising:
a Pitot pump (22) disposed within a centrifugal separator (12) configured to separate an air and a liquid from one another;
a Pitot opening (24) disposed at a first radial location along the Pitot pump (22) relative to a substantially central location (19) of the centrifugal separator (12);
a Pitot pump fluid path (26) extending from the Pitot opening (24); and
a depth-sensing port (30) disposed at a second radial location along the Pitot pump (22), the second radial location disposed radially between the first radial location and the central location, the depth-sensing port (30) in operative communication with a valve (28), wherein the valve (28) is configured to control fluid flow of the Pitot pump fluid path (26);
**characterised by**:
a diaphragm (42) disposed proximate the depth-sensing port (30), and a non-corrosive, incompressible fluid disposed within a depth-sensing port fluid path (32).

2. The liquid depth-operated valve of claim 1, wherein the valve (28) detects a total pressure proximate the depth sensing port (30).

3. The liquid depth-operated valve of claim 1 or 2 installed on a space vehicle.

4. A method of pumping liquid in a zero gravity environment comprising:
separating an air and a liquid within a centrifugal separator (12) during rotation of the centrifugal separator (12), wherein the liquid is forced toward a radially outer location of the centrifugal separator (12);
submerging a Pitot opening (24) of a Pitot pump (22) with the liquid, wherein the Pitot opening (24) is disposed at a first radial location along the Pitot pump (22);
submerging a depth sensing port (30) of the Pitot pump (22) with the liquid, wherein the depth-sensing port (30) is disposed at a second radial location along the Pitot pump (22), the second radial location disposed radially between the first radial location and the central location; and
operatively communicating a pressure at the depth-sensing port (30) to a valve (28) configured to control liquid flow of a Pitot pump fluid path (26) extending from the Pitot opening (24);
**characterised by**:
disposing a diaphragm (42) proximate the depth-sensing port (30), and disposing a non-corrosive, incompressible fluid within a depth-sensing port fluid path (32).

5. The method of claim 4, further comprising routing the non-corrosive incompressible liquid along the depth-sensing port fluid path (32) from the depth-sensing port (30) to the valve (28).

6. The method of claim 4 or 5, further comprising detecting a total pressure proximate the depth-sensing port (30), wherein the total pressure comprises a stagnation pressure and a hydrostatic pressure.

7. The method of claim 6, wherein the total pressure at the depth sensing port (30) in a submerged condition is greater than a critical pressure required to open the valve (28).

## Patentansprüche

1. Flüssigkeitsstandbetriebene Ventilanordnung (10) zur Verwendung unter Schwerelosigkeit, umfassend:
eine Pitotpumpe (22), angeordnet innerhalb eines Fliehkraftabscheiders (12), ausgelegt um Luft und eine Flüssigkeit voneinander zu trennen;
eine Pitotöffnung (24), angeordnet in einer ersten radialen Position entlang der Pitotpumpe (22) bezüglich einer im Wesentlichen zentralen Position (19) des Fliehkraftabscheiders (12) ;
eine sich von der Pitotöffnung (24) erstreckende Pitotpumpen-Flüssigkeitspassage (26); und
ein Tiefensensoranschluss (30), angeordnet in einer zweiten radialen Position entlang der Pitotpumpe (22), die zweite radiale Position angeordnet zwischen der ersten radialen Position und der zentralen Position, der Tiefensensoranschluss (30) in operativer Verbindung mit einem Ventil (28) stehend,
wobei das Ventil (28) ausgelegt ist, um die Flüssigkeitsströmung der Pitotpumpen-Flüssigkeitspassage (26) zu steuern;
**dadurch gekennzeichnet, dass**:
eine Membran (42), die unmittelbar an dem Tiefensensoranschluss (30) angeordnet ist, und eine korrosionsbeständige, nicht komprimierbare Flüssigkeit innerhalb einer Tiefensensoranschluss-Flüssigkeitspassage (32) angeordnet ist.

2. Flüssigkeitsstandbetriebene Ventilanordnung nach Anspruch 1, wobei das Ventil (28) einen Gesamtdruck unmittelbar am Tiefensensoranschluss (30) erfasst.

3. Flüssigkeitsstandbetriebene Ventilanordnung nach Anspruch 1 oder 2, eingebaut in ein Raumfahrzeug.

4. Verfahren zum Pumpen von Flüssigkeit unter Schwerelosigkeit, umfassend:
Trennen von Luft und einer Flüssigkeit innerhalb eines Fliehkraftabscheiders (12) während Rotation des Fliehkraftabscheiders (12), wobei die Flüssigkeit in Richtung einer radialen, äußeren Position des Fliehkraftabscheiders (12) gezwungen wird;
Eintauchen einer Pitotöffnung (24) einer Pitotpumpe (22) in die Flüssigkeit, wobeidie Pitotöffnung (24) in einer ersten radialen Position entlang der Pitotpumpe (22) angeordnet ist;
Eintauchen eines Tiefensensoranschlusses (30) der Pitotpumpe (22) in die Flüssigkeit, wobei der Tiefensensoranschluss (30) in einer zweiten radialen Position entlang der Pitotpumpe (22) angeordnet ist, die zweite radiale Position radial angeordnet zwischen der ersten radialen Position und der zentralen Position; und
wirksames Übermitteln eines Drucks an dem Tiefensensoranschluss (30) zu einem Ventil (28), das ausgelegt ist, die Flüssigkeitsströmung einer sich von einer Pitotöffnung (24) erstreckenden Pitotpumpen-Flüssigkeitspassage (26) zu steuern,
**dadurch gekennzeichnet, dass**:
eine Membran (42), die unmittelbar an dem Tiefensensoranschluss (30) angeordnet ist, und eine korrosionsbeständige, nicht komprimierbare Flüssigkeit innerhalb einer Tiefensensoranschluss-Flüssigkeitspassage (32) angeordnet ist.

5. Verfahren nach Anspruch 4, weiter umfassend Leiten der korrosionsbeständigen, nicht komprimierbaren Flüssigkeit entlang der Tiefensensoranschluss-Flüssigkeitspassage (32) von dem Tiefensensoranschluss (30) zu dem Ventil (28).

6. Verfahren nach Anspruch 4 oder 5, weiter umfassend Erfassen eines Gesamtdrucks unmittelbar am Tiefensensoranschluss (30), wobei der Gesamtdruck einen Staudruck und einen hydrostatischen Druck umfasst.

7. Verfahren nach Anspruch 6, wobei der Gesamtdruck an dem Tiefensensoranschluss (30) im eingetauchten Zustand größer ist als ein zum Öffnen des Ventils (28) benötigter kritischer Druck.

## Revendications

1. Ensemble de soupape opéré en fonction de la profondeur de liquide (10) destiné à utilisation en état d'apesanteur comprenant :
une pompe de Pitot (22) disposée à l'intérieur d'un séparateur centrifuge (12) conçu pour séparer un air et un liquide l'un de l'autre ;
une ouverture de Pitot (24) disposée à un premier emplacement radial le long de la pompe de Pitot (22) par rapport à un emplacement sensiblement central (19) du séparateur centrifuge (12) ;
un trajet de fluide de pompe de Pitot (26) s'étendant à partir de l'ouverture de Pitot (24) ; et
un orifice de détection de profondeur (30) disposé à un second emplacement radial le long de la pompe de Pitot (22), le second emplacement radial disposé radialement entre le premier emplacement radial et l'emplacement central, l'orifice de détection de profondeur (30) en communication fonctionnelle avec une soupape (28),
dans lequel la soupape (28) est conçue pour commander l'écoulement de fluide du trajet de fluide de pompe de Pitot (26) ;
**caractérisé par** :
un diaphragme (42) disposé à proximité de l'orifice de détection de profondeur (30), et un fluide incompressible non corrosif disposé à l'intérieur d'un trajet de fluide d'orifice de détection de profondeur (32).

2. Soupape opérée en fonction de la profondeur de liquide selon la revendication 1, dans laquelle la soupape (28) détecte une pression totale à proximité de l'orifice de détection de profondeur (30).

3. Soupape opérée en fonction de la profondeur de liquide selon la revendication 1 ou 2 installée sur un véhicule spatial.

4. Procédé de pompage de liquide en état d'apesanteur comprenant :
la séparation d'un air et d'un liquide à l'intérieur d'un séparateur centrifuge (12) pendant la rotation du séparateur centrifuge (12), dans lequel le liquide est forcé vers un emplacement radialement extérieur du séparateur centrifuge (12) ;
l'immersion d'une ouverture de Pitot (24) d'une pompe de Pitot (22) avec le liquide, dans lequel l'ouverture de Pitot (24) est disposée à un premier emplacement radial le long de la pompe de Pitot (22) ;
l'immersion d'un orifice de détection de profondeur (30) de la pompe de Pitot (22) avec le liquide, dans lequel l'orifice de détection de profondeur (30) est disposé à un second emplacement radial le long de la pompe de Pitot (22), le second emplacement radial disposé radialement entre le premier emplacement radial et l'emplacement central ; et
la communication fonctionnelle d'une pression au niveau de l'orifice de détection de profondeur (30) à une soupape (28) conçue pour commander un écoulement de liquide d'un trajet de fluide de pompe de Pitot (26) s'étendant à partir de l'ouverture de Pitot (24) ;
**caractérisé par** :
la disposition d'un diaphragme (42) à proximité de l'orifice de détection de profondeur (30), et la disposition d'un fluide incompressible non corrosif à l'intérieur d'un trajet de fluide d'orifice de détection de profondeur (32).

5. Procédé selon la revendication 4, comprenant en outre l'acheminement du liquide incompressible non corrosif le long du trajet de fluide d'orifice de détection de profondeur (32) de l'orifice de détection de profondeur (30) à la soupape (28) .

6. Procédé selon la revendication 4 ou 5, comprenant en outre la détection d'une pression totale à proximité de l'orifice de détection de profondeur (30), dans lequel la pression totale comprend une pression de stagnation et une pression hydrostatique.

7. Procédé selon la revendication 6, dans lequel la pression totale au niveau de l'orifice de détection de profondeur (30) dans un état immergé est supérieure à une pression critique requise pour ouvrir la soupape (28).
